(19) Europäisches Patentamt
European Patent Office
Office européen des brevets

(11) **EP 2 045 778 A2**

(12) **EUROPEAN PATENT APPLICATION**

(43) Date of publication:
**08.04.2009 Bulletin 2009/15**

(51) Int Cl.:
**G06T 15/70** (2006.01)

(21) Application number: **08253162.5**

(22) Date of filing: **29.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **04.10.2007 US 973335**

(71) Applicant: **DreamWorks Animation LLC Glendale, CA 91201 (US)**

(72) Inventors:
• **Borac, Silviu**
 **Pacifica, California 94044 (US)**
• **Hadap, Sunil S.**
 **San Jose, California 95110 (US)**

(74) Representative: **Forsythe, Dominic**
 **J.A. Kemp & Co.**
 **14 South Square**
 **Gray's Inn**
 **London WC1R 5JJ (GB)**

(54) **Method and apparatus for animating the dynamics of hair and similar objects**

(57) Animating strands (such as long hair), for movies, videos, etc. is accomplished using computer graphics by use of differential algebraic equations. Each strand is subject to simulation by defining its motion path, then evaluating dynamic forces acting on the strand. Collision detection with any objects is performed, and collision response forces are evaluated. Then for each frame a differential algebraic equations solver is invoked to simulate the strands.

FIG. 1

## Description

### FIELD OF THE INVENTION

This disclosure is directed to simulating the motion of thin and long objects ("strands" such as hair) in the field of computer graphics and more specifically for animation.

### BACKGROUND OF THE INVENTION

The technical problem of simulating by computer graphics the dynamics of strands in terms of the forward dynamics problem for rigid multi-body serial chains is well known; see S. Hadap, *Hair Simulation*, (Ph.D. Thesis, Dept. of Informatics, Univ. of Geneva, Switzerland, 2003). One method uses recursive algorithms for solving the forward dynamics problem of rigid multi-body serial chains. Such algorithms are well known; see R. Featherstone, *Robot Dynamics Algorithms*, (Kluwer Academic Publishers, 1987). Recursive and residual algorithms for the simulation of multi-body systems are also known; see J. 1. Rodriguez, J. M. Jimenez, F. J. Funes, J. G. de Jalon, "Recursive and Residual Algorithms for the Efficient Numerical Integration of Multi-Body Systems," Multibody System Dynamics, 11(4), (Springer Netherlands, May 2004): 295-320.

### SUMMARY

Examples of objects whose motion can be animated well using the present method and apparatus include long hair, wavy or curly hair, braids, animal ears, tails, foliage, and jewelry. The method is implemented in computer software, of the type that animation artists use in production of computer animated motion pictures or videos.

The present method advantageously simulates accurately the physical effects of inertia, centrifugal and Coriolis forces, gravity, wind or other force fields on strands. The method handles correctly non-zero bend and twist in the rest shape of the strands, as well as changes in bend and twist during the simulation. In many systems for simulating strands the joint constraints between the strand elements ("links") are satisfied only approximately, a procedure which is prone to numerical errors. The present method enforces these constraints exactly. The method uses a formulation based on the minimal set of coordinates needed to specify the strands' configuration. This simplifies the task of specifying the rest shape and ensures optimal use of computing resources. The method employs algorithms for kinematics and dynamics computations that are optimal; the number of operations grows linearly in the number of links. The method correctly computes collisions between strands and scene geometry. The method simulates correctly the effects of constraints and collisions, including static and dynamic friction associated with collisions. The method uses analytical methods for simulating the effects of constraints. Using the present method, it is possible to art-direct intuitively and effectively the physically based simulation of the animated objects.

In the present method, the equations of motion for strands are formulated as a system of differential algebraic equations (DAE). Analytical constraints are computed as external forces, and thus the user is able to impose analytical constraints in the framework of DAE. An approximate representation of static and dynamic friction as unilateral constraints is also provided. For solving the system of DAEs corresponding to strand dynamics, the DAE solver software DASPK well known in the computer field is used in one embodiment.

### BRIEF DESCRIPTION OF THE DRAWINGS

FIG. 1 is a flowchart of the present method.
FIG. 2 shows a strand as a multi-body system.
FIG. 3 shows constraints acting on the FIG. 2 system.
FIG. 4 shows collisions with an obstacle.
FIG. 5 shows an apparatus for performing the FIG. 1 method.

### DETAILED DESCRIPTION

The present method uses a formulation of strand dynamics in terms of Differential Algebraic Equations ("DAE"). DAE are well known; see K. E. Brenan, S. L. Campbell, L. R. Petzold, Numerical Solution of Initial-Value Problems in Differential-Algebraic Equations, (SIAM, 1996). The motion equations corresponding to strands are highly non-linear and have large numerical stiffness. Non-linear behavior is due to Coriolis forces and the non-linear elastic model used to limit high deformations. Numerical stiffness in the simulation of strand dynamics is caused by small rotational inertia due to thin geometry, large bending and torsional stiffness-to-mass ratio, and non-straight rest shape.

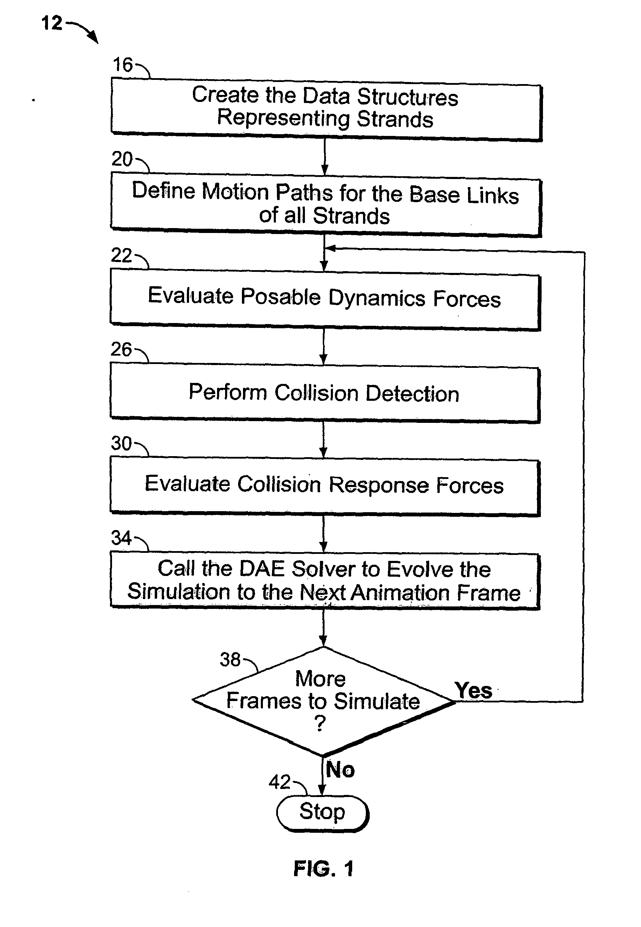

The DAE approach is used here to improve the numerical stability of the strand system in the presence of non-linearity and numerical stiffness. Improved numerical stability allows larger time steps in the simulation, with a corresponding improvement of the system's interactive response time. FIG. 1 thus shows the present method 12 in flowchart form, as would be carried out by a computer program (software) in the context of animation of strands. In the first block 16, a conventional data structure is provided representing the strands. For instance, the strands are represented as instances of a class ('class' is used here in the sense of an object-oriented programming language construct, see for example B. Stroustroup "The C++ Programing Language", Addison-Wesley 2001). The data that is being grouped by the class that represents a strand includes:

- position, velocity, acceleration, orientation, angular velocity and angular acceleration of the strand as a whole.

- position, velocity, acceleration, orientation, angular velocity and angular acceleration of an animated strand that is used as reference for art-direction..

- parameters used to implement the elasticity model of the strand: torsional stiffness and anisotropic bend stiffness coefficients.

- a vector of instances of a class representing the segments that make up the strand.

- a vector of data structures representing joints between segments.

- a vector of data structures representing joint velocities.

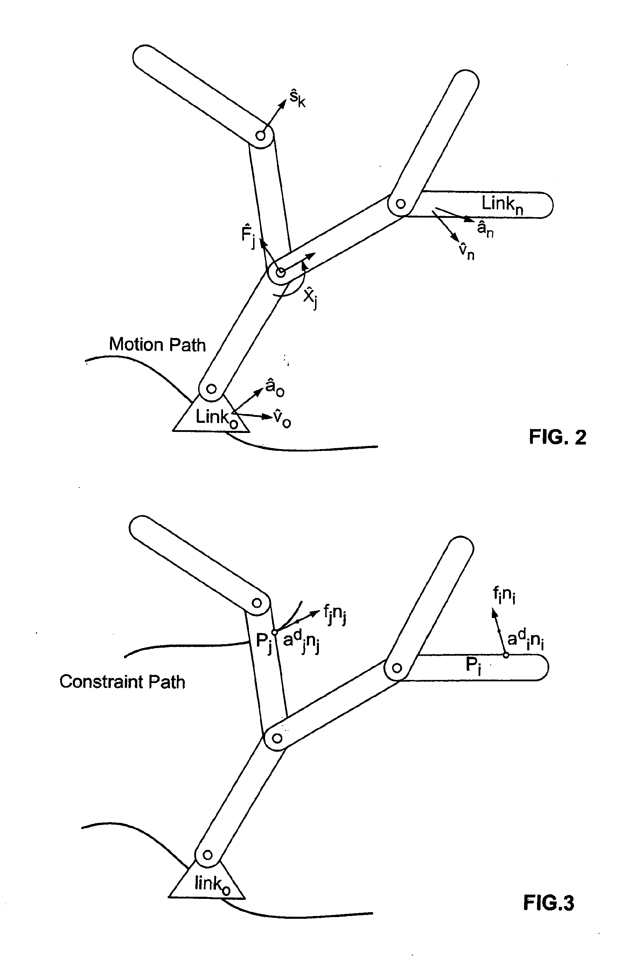

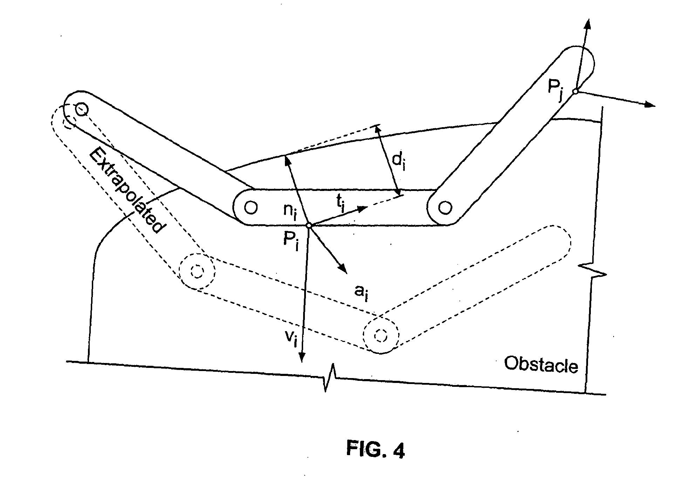

Next at 20, motion paths in space are defined for the base link (see FIG. 2) for each strand of interest. Next at 22, possible dynamic forces are computed (see FIG. 3). Then at 26, collisions with any obstacles are detected (see FIG. 4) Then at 30, the response forces from the detected collisions are computed. Then at 34, the DAE solver is invoked to solve the resulting strand simulation for the current animation frame. At 38, it is determined if any additional frames are to be simulated (animated). Detail of each block of FIG. 1 is provided hereinafter.

DAEs are a well known general form of differential equations, where the equations are expressed in implicit rather than explicit form:

$$\mathbf{F}(\mathbf{y}, \dot{\mathbf{y}}, t) = \mathbf{0} \tag{1}$$

Compare Eq. (1) with a differential equation given in the more familiar explicit form:

$$\ddot{\mathbf{q}} = \mathbf{M}^{-1}\mathbf{G}(\mathbf{q}, \dot{\mathbf{q}}, t) \tag{2}$$

where the highest order derivatives are separated on the left hand side of the equations. Because of this freedom, DAEs form a much larger class of differential equations than the class of explicit differential equations.

The dynamic state of a strand is completely described for purposes of animation by the state vector:

$$\mathbf{y} = \begin{bmatrix} \mathbf{q} \\ \dot{\mathbf{q}} \end{bmatrix} \tag{3}$$

where q are is a vector of joint variables and q is a vector of the joint velocities. Both vectors have size n, where $n$ is the total number of degrees of freedom allowed by the joints which couple adjacent strand links. In general, the total number of degrees of freedom n is different from the number of links m, because joints may have more than one degree of freedom.

The DAE solver advances the solution from state $[y, \square]_t$ to $[y, \square]_{t+1}$. The well known DASPK software is used as the DAE solver in one embodiment. The DAE solver requires a definition of the residue function:

$$\mathbf{rs}(t) \equiv \mathbf{F}(\mathbf{y}(t), \dot{\mathbf{y}}(t), t)$$

$$(4)$$

There are 2n equations in the DAE system describing the dynamics of a strand: the first n are the force balance equations for the $n$ links, see Equations (8) and (10) below. The last $n$ are consistency conditions between $\mathbf{y} = \begin{bmatrix} \mathbf{q} \\ \dot{\mathbf{q}} \end{bmatrix}$

and $\dot{\mathbf{y}} = \begin{bmatrix} \dot{\mathbf{q}} \\ \ddot{\mathbf{q}} \end{bmatrix}$, due to $\dot{q}$ appearing in both.

A recursive formulation of the kinematic and dynamic equations is used here. This is well known; see R. Cottle, J. S. Pang, R. Stone, The Linear Complementarity Problem, (Academic Press, 1992). The recursive formulation has the advantages that it achieves linear time in n, while using reduced coordinates and thus satisfying exactly all the constraints between the bodies making up the strands.

In the recursive formulation, the equations of motion of the system are expressed only implicitly as recurrence relations between physical quantities. The computation of the residual function rs(t) has two recursive steps: forward kinematics: given the velocity and acceleration of the root link $v_0$, $a_0$ and the state vector [q, $\dot{q}$] determine the velocities and accelerations of all links; and forward dynamics: given all the above plus the inertia tensors of the links and external forces determine the residual (unbalanced) forces for all links.

To describe the dynamics of the multi-body system, the present method uses spatial algebra and the associated well known notation, see R. Featherstone, Robot Dynamics Algorithms, (Kluwer Academic Publishers, 1987). Consider a serial branched multi-body system (a strand) having $m$ links connected by $m$ joints as shown in FIG. 2. There are no loops in this multi-body system. The base link is denoted by $link_0$ and is typically constrained to a motion path (see FIG. 1). This means that the velocity and acceleration $v_0$, $a_0$ of the base link are specified by the animation system instead of being a result of the dynamics simulation. The other links are numbered in a breadth first manner, i.e. ensuring that the parent of a link has always a smaller index than the link itself.

The kinematics equations in spatial notation between $link_j$ and its parent $link_i$ are:

$$\hat{\mathbf{v}}_j = \hat{\mathbf{X}}_j \hat{\mathbf{v}}_i + \hat{\mathbf{s}}_j \dot{\mathbf{q}}_j$$

$$(5)$$

$$\hat{\mathbf{a}}_j = \hat{\mathbf{X}}_j \hat{\mathbf{a}}_i + \hat{\mathbf{s}}_j \ddot{\mathbf{q}}_j + \hat{\mathbf{v}}_j \tilde{\times} \hat{\mathbf{s}}_j \dot{\mathbf{q}}_j$$

$$(6)$$

The spatial velocity $\hat{v}_j$, spatial acceleration $\hat{a}_j$ and spatial inertia matrix $\hat{I}_j$ are all defined in the local frame $\hat{F}_j$ that is rigidly attached to the principal inertia axis of $link_j$. The joint variables $q_j$ define the spatial transformation $\hat{X}_j$ that may be used to transform spatial quantities defined in the parent's frame $\hat{F}_i$ to the frame $\hat{F}_j$. The spatial matrix of the joint axis connecting $link_j$ to its parent link is $\hat{s}_j$. The computation of the forward kinematics of the system amounts to applying Equations (5-6) for $j = 1 \ldots m$ while starting from the given velocity $\hat{v}_0$ and acceleration $\hat{a}_0$ of the root link.

In the DAE framework, computing forward dynamics means computing a scalar residue value for each degree of freedom of a joint. These residue values are associated with the links' accelerations. First, the force balance condition for each link are used to obtain residual forces. This computation is again recursive and, due to data dependencies, starts from the outermost links and proceeds towards the base link.

Consider one of the outermost links and denote it by $link_m$. The force balance equation for $link_m$ is:

$$\hat{rs}_m = \hat{I}_m \hat{a}_m + \hat{v}_m \hat{\times} \hat{I}_m \hat{v}_m - \hat{f}_m \qquad (7)$$

where $\hat{f}_m$ is the external spatial force acting on $link_m$ and $\hat{rs}_m$ is the spatial force residue.

The residue for $link_m$ is obtained by projecting the force residue $\hat{rs}_m$ onto the associated joint's motion subspace defined by the spatial joint axis $\hat{S}_m$. The joint actuation force associated with the strand deformation model $Q_m$ is accounted for, which also acts in the joint's motion subspace (the deformation model is explained below):

$$rs_m = \hat{s}_m^S \hat{rs}_m - Q_m \qquad (8)$$

Here $rs_m$ has a number of components equal to the dimension of the joint's motion subspace, i.e. to the number of degrees of freedom of the joint connecting $link_m$ to the rest of the multi-body system.
The force balance equation for $link_i$, which is the parent of $link_j$, is:

$$\hat{rs}_i = \hat{I}_i \hat{a}_i + \hat{v}_i \hat{\times} \hat{I}_i \hat{v}_i - \hat{f}_i + \sum_j \hat{X}_j^{-1} \hat{rs}_j \qquad (9)$$

where $\hat{F}_i$ is the external spatial force acting on $link_i$. Note that the balance equation accounts for the effect of the spatial force residual of $link_j$. To bring this force in $link_i$'s frame the inverse of the transform $\hat{X}_j$ is used. The sum is over the children of $link_i$. As above, the DAE residual is the projection of the spatial force residual in the joint's motion space:

$$rs_i = \hat{s}_i^S \hat{rs}_i - Q_i \qquad (10)$$

This process is repeated for each link, progressing towards the base link of the multi-body system.
The residue associated with joint velocities is simply given by consistency conditions in the representation of the dynamic state of the strand. There is $\dot{q}$ appearing in both y and □, which leads to:

$$rs_{i+n} = \dot{q}_i^* - \dot{q}_i \qquad (11)$$

where $\dot{q}_i$ and $\dot{q}_i$ are the joint velocities in y and □, respectively.
The base joint in the multi-body system in FIG. 2 is typically constrained to some prescribed motion path. In practice, it is often necessary to impose some additional constraints on the system, e.g. constraining a point on some other link to a motion path, or constraining a joint to an animated value in time, see FIG. 3. These constraints ("constraint path" in FIG. 3) are transient in nature and often introduce cyclic dependency in the system. The effects of such additional constraints are computed by augmenting the DAE based multi-body formulation. A method for computing the effects of such constraints is known, see E. Kokkevis, "Practical Physics for Articulated Characters," Proceedings of Game Developers Conference 2004 (2004) and belongs to a class of techniques called analytical methods. The main problem with this known methodology is that it is not compatible with a DAE solver. A DAE solver integrates the system without explicitly calculating the state derivatives, whereas the known method directly alters the explicitly calculated derivatives to satisfy analytical constraints.

The present approach computes analytical constraints as external forces. This allows imposing analytical constraints in the framework of DAE. Consider a point constraint $p_j$ as depicted in FIG. 3. The trajectory (path) of $p_j$, starting with the initial conditions, can be uniquely defined by the time varying acceleration $a_j^d \mathbf{n}_j$. As discussed above, here one does not directly evaluate the state derivative vectors $\square_{t+i}$ in order to integrate the system. Therefore, one cannot simply enforce the acceleration constraint, by directly altering the state derivatives $\square_{t+i}$ as known. The present method enforces the constraint by applying an external force instead.

Before every DAE integration step, the precise nature of the force $f_j n_j$, is determined analytically using the above known method. The unit constraint direction $n_j$ is treated as constant and is updated for every integration step.

There is a linear relationship between the magnitude of the applied force $f_j$ and the resulting desired acceleration $a_j^d$:

$$a_j^d = \frac{\partial a_j}{\partial f_j} f_j + a_j^0$$

$$(12)$$

where, $a_j^0$ is the acceleration in the direction $n_j$ before the force is applied.

If there is another constraint point $p_i$ with force having magnitude $f_i$ in the direction $n_i$, the resulting accelerations $a_i^d$ and $a_j^d$ will be given by the following linear system:

$$\begin{bmatrix} a_i^d \\ a_j^d \end{bmatrix} = \begin{bmatrix} \frac{\partial a_i}{\partial f_i} & \frac{\partial a_i}{\partial f_j} \\ \frac{\partial a_j}{\partial f_i} & \frac{\partial a_j}{\partial f_j} \end{bmatrix} + \begin{bmatrix} a_i^0 \\ a_j^0 \end{bmatrix}$$

$$(13)$$

Generalizing, for m such constraints one needs to determine the vector of $f \in R^m$ of unknown force magnitudes by solving the following linear system:

$$\mathbf{Kf} + \mathbf{a}^0 = \mathbf{0}.$$

$$(14)$$

The Jacobian matrix $K \in R^{m \times m}$ (well known in the field) can be evaluated by applying unit test forces at each constraint and evaluating the changes in accelerations. An efficient procedure to evaluate the Jacobian using the framework of Featherstone's Articulated Body Method is in Kokkevis, referenced above. The constraint forces thus determined are applied to the multibody system over the next integration step via the external force $\hat{f}$, as disclosed above.

One replaces the constraint direction n by a spatial vector n to generalize the type of the constraints that can be represented. For example, n can represent also joint acceleration constraints. One further extends the constraint system to include unilateral constraints such as collisions, friction and joint limits by posing it as a Linear Complementarity Problem (LCP) which is well known in the field. An LCP solver takes a linear system written in the form:

$$\mathbf{Mz} + \mathbf{q} = \mathbf{w}$$

$$(15)$$

and solves for z such that for every i:

$$z_i \geq 0, \quad w_i \geq 0 \quad \text{and} \quad z_i w_i = 0. \tag{16}$$

The following abbreviates these conditions as:

$$z_i \geq 0 \quad \text{complementary to} \quad w_i \geq 0. \tag{17}$$

The LCP of the present constraint system can then be written as:

$$\mathbf{Kf} + \mathbf{a}^0 - \mathbf{a}^d \geq \mathbf{0} \quad \text{complementary to} \quad \mathbf{f} \geq \mathbf{0} \tag{18}$$

The LCP states that the forces f, applied only in positive constraint direction, would strive to make the resulting constraint accelerations a equal to desired acceleration $a^d$. However, force $f_i$ will be zero if the resulting constraint acceleration $a_i$ is greater than desired acceleration $a_i^d$. Iterative methods are used to solve the LCP.

Using forces for enforcing the constraints has an advantage here. If the forces are indeterminate, they are projected into the multi-body's motion null-space, thus always giving valid configuration, without any jumps or jittering in the simulation. Further, as the forces are determined analytically, as compared to, e.g., penalty-based formulation, they are small for most types of the constraints. Thus they are well within the stability zone of the integrator when taking 4 to 8 time-steps per animation frame. The only exception to this is the velocity impulse constraint, discussed below. As the constraint may not be satisfied accurately, one augments the constraint acceleration by a proportional-derivative form. To exemplify, for a positional constraint, the desired acceleration and the constraint direction are:

$$\mathbf{a}_i^d = \ddot{\mathbf{p}}_i^d + K_p(\mathbf{p}_i^d - \mathbf{p}_i) + K_d(\dot{\mathbf{p}}_i^d - \mathbf{v}_i) \tag{19}$$

$$a_i^d = \|\mathbf{a}_i^d\| \tag{20}$$

$$\mathbf{n}_i^d = \frac{\mathbf{a}_i^d}{a_i^d} \tag{21}$$

where $\ddot{\mathbf{p}}_i^d$, $\dot{\mathbf{p}}_i^d$, $\mathbf{p}_i^d$ are respectively the acceleration, velocity and position of the constraint path and $\mathbf{p}_i$, $\mathbf{v}_i$ are the current position and velocity of the constraint.

The unilateral position constraints disclosed above are used to develop a collision response model for the multi-body system. Collision detection is well known in computer graphics. For brevity, the following describes only the requirements from the collision detection system as needed for the present method. Between the current configuration given by the state vector $y_t$ and the extrapolated configuration using the derivative vector $\square_t$ and integration time step $h$, one finds all the points on the multi-body system that would collide with the obstacles. FIG. 4 shows two such collision positions - point $p_i$ has already penetrated the obstacle and point $p_j$ is about to collide. There may be more than one colliding point for a link. Let $n_i$ be the collision normal, with direction pointing away from the obstacle, and $a_i$ and $v_i$ be the collision accelerations and velocities respectively, relative to the obstacle.

One applies collision response in two steps - contacts and impacts. First, the unilateral constraints are computed that would prevent collision points from accelerating towards the obstacle. This is followed by computation of velocity impulses that would prevent collision points from moving towards the obstacle.

One can decompose the collision acceleration and the collision velocity into the normal components $a_{ni}$, $v_{ni}$ and tangential components $a_{ti}$, $v_{ti}$. To prevent any acceleration towards the obstacle, a unilateral constraint is inserted along the collision normal direction $n_i$. The unilateral constraint corresponding to the friction acts in the tangent plane defined by the collision normal. Instead of sampling the tangent plane into discrete set of tangents to formulate a complex and numerically expensive friction model based of the discrete frictional cone, the present method uses a technique as follows. The unilateral constraint direction corresponding to friction is set as:

$$t_i = unit\left(a_{ti} + \frac{v_{ti}}{h}\right) \tag{22}$$

If both $a_{ti}$ and $v_{ti}$ are zero, the previously determined tangent vector is used for the contact.

Finally, the LCP formulation corresponding to the two unilateral constraints in the direction $n_i$ and $t_i$ at collision position $p_i$ is:

$$a_{ni} - a_{ni}^d \geq 0 \quad \text{complementary to} \quad f_{ni} \geq 0 \tag{23}$$

$$\mu_i f_{ni} - f_{ti} \geq 0 \quad \text{complementary to} \quad \lambda_i \geq 0 \tag{24}$$

$$(a_{ti} - a_{ti}^d) + \lambda_i \geq 0 \quad \text{complementary to} \quad f_{ti} \geq 0 \tag{25}$$

The desired normal acceleration $a_{ni}^d$ is set to be proportional to the penetration depth $d_i$ if the point is penetrating, see Equations 19-21, or zero if the collision point is outside the obstacle. The desired tangential acceleration $a_{ti}^d$ is set to $\left(-\frac{v_{ti}}{h}\right)$. The LCP formulation will compute the required amount of normal force $f_{ni}$ to remove the normal acceleration $a_{ni}$. The tangential force $f_{ti}$ will be at most $\mu_i f_{ni}$, and it will try to remove any tangential non-zero velocity component (the dynamic friction case) or if the tangential velocity is zero it will try to remove any tangential acceleration (the static friction case).

The present method uses impulses to arrest the collision normal velocity $v_{ni}$. Only those contacts are considered that have the normal velocity component $v_{ni} < 0$. For the impulse computations, one can use the same acceleration constraints discussed above by setting:

$$a_{ni}^d = -(1 + \nu)v_{ni},$$ (26)

where $\nu$ is the coefficient of restitution associated with the collision. Instead of applying potentially large forces, one alters the joint velocities $\dot{q}_t$. Although theoretically this would invalidate the consistent solution set $y_t$, $\square_t$, in practice the solver is tolerant to the error.

The dynamic strand is composed from a hierarchy of input curves defined in a local frame, that defines the initial rest shape of the corresponding multi-body system. One embodiment of the present method provides the user (animator) with high-level control over the direct numerical simulation by means of relevant physical parameters of the dynamic strand, such as mass per unit length, strand radius, bend stiffness and damping, torsional stiffness and damping, gravity, and air drag.

The user can animate all the parameters and specify their length-wise anisotropic variation. The collision parameters coefficient of restitution, coefficient of static friction, and coefficient of dynamic friction are defined per obstacle surface. The strand may have additional anisotropic weights over the collision parameters, along with their length-wise variation.

Three-degrees-of-freedom spherical joints are used in one implementation of the present strand system. The joint variable of the $i$-th joint is expressed as a quaternion $q_i$ and the joint velocity as a vector $w_i$. One decomposes the quaternion defining the relative transformation between two links into a twist component $\theta_t$ around the local y-axis and a pure bend component $\theta_b$ around a bend axis b. A nonlinear stiffness model is defined as follows:

$$Q_b = K_b \, \mathbf{b} \tan\left(\frac{(\theta_b - \theta_b^0)}{2}\right)$$ (27)

$$Q_t = K_t \, \mathbf{y} \tan\left(\frac{(\theta_t - \theta_t^0)}{2}\right)$$ (28)

where $\theta_b^0$ and $\theta_t^0$ describe the rest configuration, $K_t$ is the torsional stiffness coefficient and $K_b$ is the anisotropic bend stiffness coefficient. The response model is almost linear for small deformations. However, the non-linear response prevents excessive deformations.

General external force fields are supported using the plug-in aspect of the well known Maya animation software and that of other animation software. The user can attach any complex combination of time-varying fields such as wake, turbulence, fluid simulations and general event driven scripted force fields. The user can further specify length-wise anisotropic weights for the external force fields. The user can optionally include these fields in computing the Jacobians numerically, as discussed above.

Often the dynamical simulation is driven by very extreme and brisk animated motions. Although the present method is a robust solution able to cope with such constraints, animators sometimes want the resulting motion to be selectively less violent (abrupt). A time scale $\beta$ is provided here to control the amount of energy pumped into the strand system. $\beta$ is a factor by which the velocity and acceleration of the base joint can be scaled and it is typically between zero and one; however the user can set it to values larger than one to accentuate the motion.

The local dynamics y is another similar parameter which blends out velocity and acceleration of some local dynamics reference frame.

$$\hat{a}_0 = \beta(\hat{a}_0 - \gamma \hat{a}_{ref})$$ (29)

$$\hat{v}_0 = \beta(\hat{v}_0 - \gamma \hat{v}_{ref}) \tag{30}$$

One scenario that is frequent in animation is a braid or long hairs of a character that fly away when the character starts running or rides a horse. In this case the local dynamics reference frame can be simply set to the character's hip joint, and with an appropriate value of the local dynamics parameter one can control the amount of flyaway in the result of the simulation.

Often the animator wants to reach a certain pose for an animated character at a certain time to make the character expressive. In order to support this posable dynamics requirement the present method inserts "springs" between a dynamic strand and the desired animated pose at the tip of each segment. This results in introducing penalty based constraints. The user will typically animate the stiffness and damping of the springs, to change gradually from a purely dynamics simulation to key-frame animation and back.

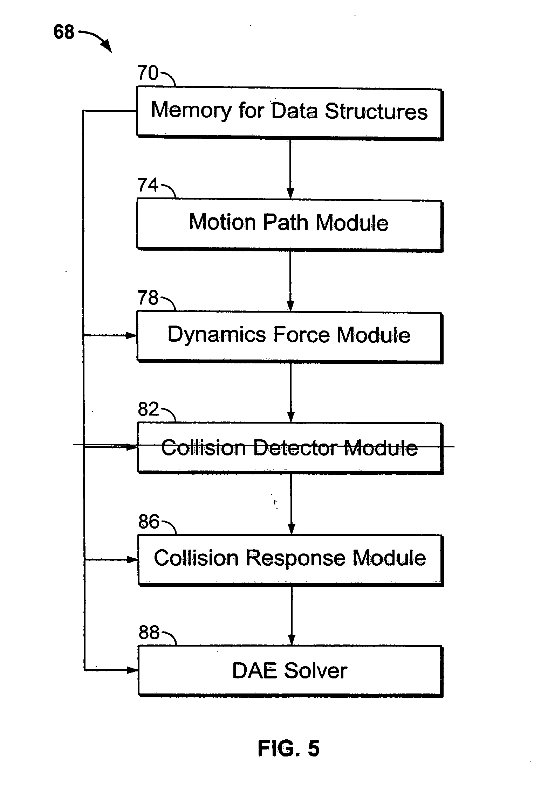

The present method is typically implemented in the form of computer software (code) executed on a computer. Coding the software, in light of this disclosure, would be routine; a suitable computer language is C+. FIG. 5 shows the structure of such a program 68 in terms of a group of modules each corresponding to activity in one of the steps of the FIG. 1 method. Thus in FIG. 5, memory 70 stores the strand data structures. A motion path component 74 (module) defines the motion path for the base link of each strand. A dynamics force module 78 evaluates the dynamic forces for each strand. A collision detector module 82 performs the collision detection for the strands, while collision response module 86 evaluates the collision response forces DAE solver 88 solves the differential algebraic equations for all strands in the current frame. The software itself would typically be stored on a computer readable medium (memory), such as a tape, disk, hard disk, flash memory, etc., for execution by the computer processor.

This disclosure is illustrative and not limiting; further modification will be apparent to those skilled in the art in light of this disclosure and are intended to fall within the scope of the appended claims.

**Claims**

1. A computer implemented method of depicting a plurality of strands comprising the acts of:

   providing a plurality of data structures, each corresponding to a strand;
   defining a path for motion of a base element of each strand;
   evaluating at least one dynamic force interacting with each strand;
   detecting any collision between each strand and an obstacle;
   evaluating a response force for each detected collision; and
   depicting each strand including the path, the dynamic force, the collision, and the response force by using differential algebraic equations on the data structure for each strand.

2. The method of claim 1, further comprising the acts of:

   incrementing a unit of time; and
   repeating the acts of claim 1 at the next time unit.

3. The method of claim 2, wherein the unit of time is the duration of one frame of animation.

4. The method of any one of claims 1 to 3, wherein each data structure corresponds to a model of a multi-body serial chain.

5. The method of claim 4, wherein each data structure is a plurality of vectors, each vector having a size corresponding to a number of degrees of freedom associated with joints between the bodies.

6. The method of any one of the preceding claims, wherein the differential algebraic equations include a force balance equation and consistency conditions.

7. The method of any one of the preceding claims, wherein the base element is constrained to its associated path.

8. The method of any one of the preceding claims, further comprising defining a spatial velocity, a spatial acceleration, and a spatial inertia for each element of each strand.

9. The method of any one of the preceding claims, wherein the dynamic force is external to each strand.

10. The method of any one of the preceding claims, wherein:

the collision detection includes evaluating contacts between the strand and the obstacle, and the evaluating a response force includes arresting a velocity of the detected collision;
the data structure includes, for each strand, a set of parameters including at least one of a mass per unit length, a radius, a bend stiffness; a torsional stiffness, gravity, and drag; and/or
each detected collision includes a set of parameters including at least one of a coefficient of restitution, a coefficient of static friction, and a coefficient of dynamic friction.

11. The method of claim 4, wherein each body in the serial chain is coupled to an adjacent body by a joint expressed as a spherical joint having 3 degrees of freedom.

12. The method of any one of the preceding claims, further comprising providing a scale factor, wherein the scale factor scales velocity and acceleration of movement of each strand.

13. A computer readable medium storing computer code for carrying out the method of any one of the preceding claims.

14. A computer programmed to carry out the method of any one of the preceding claims.

15. Computer implemented apparatus for depicting a plurality of strands, comprising:

a memory storing a plurality of data structures, each corresponding to a strand;
a motion path component coupled to the memory and which defines a path for motion of a base element of each strand;
a dynamics force component coupled to the motion path component and to the memory and which evaluates at last one dynamic force interacting with each strand;
a collision detector component coupled to the dynamic force component and to the memory and which detects any collision between each strand and an obstacle;
a collision response component coupled to the collision detector and the memory and which evaluates a response force for each detected collision; and
a differential algebraic equation solver coupled to the memory, the motion path component, the dynamics force component, the collision detector, and the collision response component and which depicts each strand using differential algebraic equations.

FIG. 1

**FIG. 2**

**FIG.3**

**FIG. 4**

68

70
Memory for Data Structures

74
Motion Path Module

78
Dynamics Force Module

82
Collision Detector Module

86
Collision Response Module

88
DAE Solver

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Recursive and Residual Algorithms for the Efficient Numerical Integration of Multi-Body Systems. **J. 1. RODRIGUEZ ; J. M. JIMENEZ ; F. J. FUNES ; J. G. DE JALON.** Multibody System Dynamics. Springer, May 2004, vol. 11, 295-320
- **K. E. BRENAN ; S. L. CAMPBELL ; L. R. PET-ZOLD.** Numerical Solution of Initial-Value Problems in Differential-Algebraic Equations. *SIAM,* 1996
- **B. STROUSTROUP.** The C++ Programing Language. Addison-Wesley, 2001
- **R. COTTLE ; J. S. PANG ; R. STONE.** The Linear Complementarity Problem. Academic Press, 1992
- **R. FEATHERSTONE.** Robot Dynamics Algorithms. Kluwer Academic Publishers, 1987
- **E. KOKKEVIS.** Practical Physics for Articulated Characters. *Proceedings of Game Developers Conference 2004,* 2004